# EUROPÄISCHE PATENTANMELDUNG

(11) **EP 1 867 703 A2**
(43) Veröffentlichungstag der Anmeldung: **19.12.2007**
(21) Anmeldenummer: 07011677.7
(22) Anmeldetag: 14.06.2007
(51) Int. Cl.: C10L 5/44

(54) **Verfahren zur Herstellung von Holzpresslingen**

(30) Priorität: 14.06.2006 DE 102006027927
(71) Anmelder: Kahlen, Dirk, 47608 Geldern (DE)
(72) Erfinder: Kahlen, Dirk, 47608 Geldern (DE)
(74) Vertreter: DR. STARK & PARTNER

(57) **Zusammenfassung**

Die Erfindung betrifft ein Verfahren zu Herstellung von Holzpresslingen, wobei Holzmehl zu Formstücken verpresst wird. Um Holzpresslinge ohne Berücksichtigung der lokalen Verfügbarkeit von Sägemehl herstellen zu können, soll zumindest ein Anteil des zu verpressenden Holzmehls durch eine vorgeschaltete Aufbereitung aus Altholz und/oder Frischholz bereitgestellt werden, indem das Altholz und/oder Frischholz grob zerkleinert wird, Fremdkörper abgesondert werden und eine Feinzerkleinerung zu Holzmehl erfolgt.

## Beschreibung

Die Erfindung betrifft ein Verfahren zu Herstellung von Holzpresslingen, wobei Holzmehl zu Formstücken verpresst wird.

Derartige Holzpresslinge werden zu Heizzwecken verfeuert und stellen eine umweltfreundliche Heizenergie dar, da sie aus einem relativ schnell nachwachsende Rohstoff gewonnen werden.

Aus der Praxis sind Verfahren bekannt, bei denen das Holzmehl aus bei der Holzverarbeitung in Form von Sägemehl anfallenden Bearbeitungsabfällen besteht.

Nachteilig hierbei ist, dass zum einen die Menge des zur Verfügung stehenden Rohmaterials beschränkt ist und von dem Umfang der holzverarbeitenden Betriebe abhängt. Zum anderen steht der entsprechende Rohstoff nur in der Nachbarschaft holzverarbeitender Betriebe zur Verfügung oder aber muss zu einem Betrieb, der Holzpresslinge herstellt, oder aber muss zu einem Betrieb, der Holzpresslinge herstellt, transportiert werden.

Aufgabe der Erfindung ist es, die vorgenannten Nachteile zu vermeiden und ein Verfahren anzugeben, mit dem Holzpresslinge ohne Berücksichtigung der lokalen Verfügbarkeit von Sägemehl hergestellt werden können.

Diese Aufgabe wird dadurch gelöst, dass zumindest ein Anteil des zu verpressenden Holzmehls durch eine vorgeschaltete Aufbereitung aus Altholz und/oder Frischholz bereitgestellt wird, indem das Altholz und/oder Frischholz grob zerkleinert wird, Fremdkörper abgesondert werden und eine Feinzerkleinerung zu Holzmehl erfolgt. Hierdurch kann eine Herstellung gattungsgemäßer Holzpresslinge wesentlich einfacher erfolgen, da das "Rohmaterial" quasi unbegrenzt und nicht mit geografischen Schwerpunkten zur Verfügung steht.

Als Frischholz werden entlaubte Bäume bezeichnet, wohingegen unter Altholz gröbere Abfälle aus der Holzbe- und - verarbeitung, wie z.B. Verschnitt, Abschnitte, Späne von naturbelassenem Vollholz oder auch behandeltem Holz anzusehen sind. Auch fallen unter diesen Begriff Paletten aus Vollholz oder aus Holzwerkstoffen sowie andere Gegenstände aus Vollholz oder Holzwerkstoffen, wie beispielsweise Bauspanplatten, Möbel sowie Kisten und Verschläge. Insbesondere sind die in der Altholzverordnung mit der Zuordnung AI und AII versehenen Altholzsortimente vorliegend zur Herstellung von Holzpresslingen vorgesehen.

Die grobe Zerkleinerung kann dabei beispielsweise durch Schlagen oder Shreddern erfolgen und die resultierenden Hackschnitzel können eine Größe von ca. 1-50 mm aufweisen. Das Absondern von Fremdkörpern wie z. B. Sand, Erde, Nägel, Schrauben etc. kann beispielsweise durch Sieben erfolgen.

Erfindungemäß kann zumindest ein wesentlicher Anteil des zu verpressenden Holzmehls, d. h. zumindest mehr als 50 %, insbesondere das gesamte zu verpressende Holzmehl, durch eine vorgeschaltete Aufbereitung aus Altholz und/oder Frischholz bereitgestellt werden, so dass der Hauptbedarf des Holzmehls aus lokal verfügbarem Altholz und/oder Frischholz bereitgestellt wird, insbesondere das gesamte Holzmehl hieraus gewonnen wird.

Vorteilhafterweise können die Holzpresslinge als Holzpellets oder Holzbriketts ausgebildet sein, was die üblichsten Formen von Holzpresslingen zu Heizzwecken sind. Es sind jedoch auch andere verpresste Formen möglich, sofern sie für den beabsichtigten Verwendungszweck, nämlich der Verfeuerung zu Heizzwecken, geeignet sind.

Vorzugsweise können während der Feinzerkleinerung die bereits zu Holzmehl zerkleinerten Anteile abgeführt und in einem Zwischenlager gesammelt werden, so dass eine gesteigerte Effizienz des Zerkleinerungsprozesses resultiert.

Die Absonderung von Fremdkörpern kann durch mechanische Verfahren, wie z. B. Sieben, erfolgen. Es sind jedoch auch andere Verfahren zur Absonderung von Fremdkörpern möglich, beispielsweise magnetische Trennverfahren zur Absonderung von ferromagnetischen Bestandteilen oder aber eine gravimetrische Trennung, beispielsweise im Luftstrom.

Bei einem bevorzugten Ausführungsbeispiel kann - in Abhängigkeit von dem Anteil an Nichtholz-Fremdstoffen in dem Holzmehl - eine Mischung eines aus Altholz und/oder Frischholz bereitgestellten, jedoch verunreinigten Holzmehls mit einem reineren, d. h. weniger verunreinigten Holzmehl, insbesondere vollständig reinem Holzmehl, erfolgen, so dass auch Holzmehl aus verunreinigtem Holz zur Herstellung der Holzpresslinge eingesetzt werden kann. Dabei kann das zu verpressende Holzmehl, das aus verunreinigtem und nicht verunreinigtem Holzmehl gemischt ist, insbesondere hinsichtlich der enthaltenen Verunreinigungen die Grenzwerte der DIN 51731 einhalten und sich entsprechend inhaltlich zusammensetzen.

Die Erfindung betrifft auch einen Holzpressling, der aus Holzmehl verpresst ist. Die vorbekannten Holzpresslinge sowie die hierin begründeten Nachteile sind bereits eingangs genannt worden.

Diese Aufgabe, einen ohne Berücksichtigung der lokalen Verfügbarkeit von Sägemehl herstellbaren Holzpressling anzugeben, wird dadurch gelöst, dass zumindest ein Anteil des verpressten Holzmehls aus Altholz und/oder Frischholz besteht, welches mittels einer vorgeschalteten Aufbereitung durch grobes Zerkleinern, Absondern von Fremdkörpern und Feinzerkleinern zu Holzmehl bereitgestellt ist. Hierdurch ist ein wesentlich einfacher herstellbarer gattungsgemäßer Holzpresslinge gegeben, da das "Rohmaterial" quasi unbegrenzt und nicht mit geografischen Schwerpunkten zur Verfügung steht.

Vorzugsweise kann der Holzpressling als Holzpellet oder Holzbrikett ausgebildet sein, was die üblichsten Formen von Holzpresslingen zu Heizzwecken sind. Es sind jedoch auch andere verpresste Formen möglich, sofern sie für den beabsichtigten Verwendungszweck, nämlich der Verfeuerung zu Heizzwecken, geeignet sind.

## Patentansprüche

1. Verfahren zu Herstellung von Holzpresslingen, wobei Holzmehl zu Formstücken verpresst wird, **dadurch gekennzeichnet, dass** zumindest ein Anteil des zu verpressenden Holzmehls durch eine vorgeschaltete Aufbereitung aus Altholz und/oder Frischholz bereitgestellt wird, indem das Altholz und/oder Frischholz grob zerkleinert wird, Fremdkörper abgesondert werden und eine Feinzerkleinerung zu Holzmehl erfolgt.

2. Verfahren nach dem vorhergehenden Anspruch, **dadurch gekennzeichnet, dass** zumindest ein wesentlicher Anteil des zu verpressenden Holzmehls, insbesondere das gesamte zu verpressende Holzmehl, durch eine vorgeschaltete Aufbereitung aus Altholz und/oder Frischholz bereitgestellt wird.

3. Verfahren nach einem der vorhergehenden Ansprüche, **dadurch gekennzeichnet, dass** die Holzpresslinge als Holzpellets oder Holzbriketts ausgebildet sind.

4. Verfahren nach einem der vorhergehenden Ansprüche, **dadurch gekennzeichnet, dass** während der Feinzerkleinerung die bereits zu Holzmehl zerkleinerten Anteile abgeführt und in einem Zwischenlager gesammelt werden.

5. Verfahren nach einem der vorhergehenden Ansprüche, **dadurch gekennzeichnet, dass** die Absonderung von Fremdkörpern durch mechanische Verfahren, wie Z. B. Sieben, erfolgt.

6. Verfahren nach einem der vorhergehenden Ansprüche, **dadurch gekennzeichnet, dass** in Abhängigkeit von dem Anteil an Nichtholz-Fremdstoffen in dem Holzmehl eine Mischung mit reinerem Holzmehl, insbesondere vollständig reinem Holzmehl, erfolgt.

7. Holzpressling, der aus Holzmehl verpresst ist, insbesondere nach einem der Ansprüche 1 bis 6 hergestellt, **dadurch gekennzeichnet, dass** zumindest ein Anteil des verpressten Holzmehls aus Altholz und/oder Frischholz besteht, welches mittels einer vorgeschalteten Aufbereitung durch grobes Zerkleinern, Absondern von Fremdkörpern und Feinzerkleinern zu Holzmehl bereitgestellt ist.

8. Holzpressling, **dadurch gekennzeichnet, dass** der Holzpressling als Holzpellet oder Holzbrikett ausgebildet ist.
